# EUROPEAN PATENT APPLICATION

(11) **EP 1 655 916 A2**
(43) Date of publication of application: **10.05.2006**
(21) Application number: 05256814.4
(22) Date of filing: 03.11.2005
(51) Int. Cl.: H04L 12/64, H04L 12/56, H04L 12/417

(54) **Asynchronous network system, information processing apparatus, data-transmission managing method, data-reception managing method, and program**

(30) Priority: 05.11.2004 JP 2004321863
(71) Applicant: SONY CORPORATION, Tokyo 141 (JP)
(72) Inventor: Matsunaga, Osamu, Sony Corporation, Tokyo 141 (JP); Nagasawa, Fumihiro, Sony Corporation, Tokyo 141 (JP); Ohnaka, Shinobu, Sony Corporation, Tokyo 141 (JP)
(74) Representative: Horner, David Richard

(57) **Abstract**

An asynchronous network system includes a transmitting apparatus which transmits time-synchronization-information data through an asynchronous network, and information processing apparatuses which share identical time information by receiving the time-synchronization-information data. At least one data item whose transmission and reception within a predetermined reaching time are requested to be guaranteed is transmitted by one information processing apparatus among the information processing apparatuses to at least one of the other information processing apparatuses in a state in which the one information processing apparatus occupies a first interval on a communication schedule based on time-synchronization information represented by the time-synchronization-information data.

## Description

### BACKGROUND OF THE INVENTION

The present invention relates to an asynchronous network system, information processing apparatus, data-transmission managing method, data-reception managing method, and program.

In common LAN (local area network) communication, it is not assumed that particular data packets occupy a transmission path. In other words, it is premised that a plurality of services can transmit corresponding data packets anytime. Accordingly, for each service, it is necessary to consider how much packet loss and delay are acceptable which are caused by data-packet collisions occurring during transmission of data packets.

This is not a big problem for transmitting data packets corresponding to a service that does not need to be offered in real time, but is a big problem for transmitting data packets corresponding to a service that needs to be offered in real time.

Technologies considering this problem are disclosed in Japanese Patent Nos. 3385899 (real-time communication method) and 1963910 (multimedia LAN system).

Japanese Patent No. 3385899 discloses a technology in which, by transmitting data packets which are periodically generated and which need real-time functionality within a predetermined time, the amount of data that can be transmitted within the predetermined time is reduced to a predetermined value or less.

In addition, Japanese Patent No. 1963910 discloses a technology that guarantees real-time functionality by providing synchronous time slots, synchronous transfer slots, and asynchronous transfer time slots which are common to the entirety of a LAN system, and using the synchronous time slots.

There is a case in which, regarding a specific video frame, it is necessary to use a network to control the operation, by a plurality of video switching apparatuses, of simultaneously switching their video signal outputs.

To realize this control, not only transmission of corresponding control-data packets in a particular fixed time by a control apparatus, but also reception of the control-data packets within a particular fixed time by one video switching apparatus needs to be executed.

However, when a LAN is used for transmitting the control-data packets, it is difficult for the technologies disclosed in Japanese Patent Nos. 3385899 and 1963910 to satisfy the above condition. In other words, in either technology, for data-packet communication that needs to be performed in real time, a sufficient bandwidth can be guaranteed, but it is difficult to guarantee reaching of data packets and reception of the packets in a fixed time.

### SUMMARY OF THE INVENTION

An embodiment of the present invention relates to an asynchronous network system that transmits, in a packet multiplexing form, data whose transmission and reception within a predetermined reaching time are requested to be guaranteed, and data whose transmission and reception within a predetermined reaching time are not requested to be guaranteed.

Another embodiment of the present invention relates to an information processing apparatus that functions as a transmitting apparatus for transmitting data whose transmission and reception within a predetermined reaching time are requested to be guaranteed.

Another embodiment of the present invention relates to an information processing apparatus that functions as a receiving apparatus for receiving data whose transmission and reception within a predetermined reaching time are requested to be guaranteed.

Another embodiment of the present invention relates to a method for managing data transmission via an asynchronous network and a method for managing data reception.

In addition, still another embodiment of the present invention relates to a program that allows an information processing apparatus existing on an asynchronous network to function as a transmitting apparatus or a receiving apparatus.

According to an embodiment of the present invention, there is provided an asynchronous network system including a transmitting apparatus which transmits time-synchronization-information data through an asynchronous network and a plurality of information processing apparatuses which share identical time information by receiving the time-synchronization-information data, wherein at least one data item whose transmission and reception within a predetermined reaching time are requested to be guaranteed is transmitted by one information processing apparatus among the plurality of information processing apparatuses to at least one of the other information processing apparatuses in a state in which the one information processing apparatus occupies a first interval on a communication schedule based on time-synchronization information represented by the time-synchronization-information data.

According to an embodiment of the present invention, by adaptively setting a time allocated to a first interval in accordance with characteristics of an asynchronous network, even in the asynchronous network, regarding a data packet whose transmission and reception within a predetermined reaching time are requested to be guaranteed, reaching of the data packet within the reaching time and the execution of reception for the reaching can be realized.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram showing an example of an asynchronous network system according to a first embodiment of the present invention;
Fig. 2 is a time chart showing a communication schedule in the first embodiment;
Fig. 3 is a block diagram showing an example of an asynchronous network system according to a second embodiment of the present invention;
Fig. 4 is a time chart showing a communication schedule in a normal mode in the second embodiment;
Fig. 5 is a time chart showing a communication schedule in an abnormal mode in the second embodiment;
Fig. 6 is a block diagram showing an example of an asynchronous network system according to a third embodiment of the present invention; and
Fig. 7 is a time chart showing a communication schedule in the third embodiment.

### DESCRIPTION OF THE PREFERRED EMBODIMENTS

Information processing apparatuses according to embodiments of the present invention are described below.

Regarding portions of this specification which are not particularly shown or described, commonly known or publicly known technology is applied.

The following embodiments are exemplifications of the present invention and the present invention is not limited thereto.

### A. First Embodiment

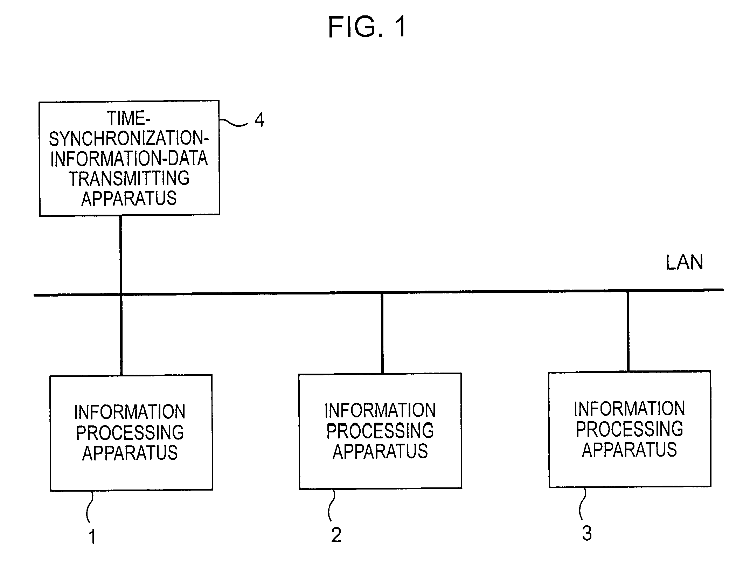

Fig. 1 shows an asynchronous network system according to a first embodiment of the present invention. This asynchronous network system includes three information processing apparatuses 1, 2, and 3, and a time-synchronization-information-data transmitting apparatus 4.

The information processing apparatuses 1, 2, and 3 are network terminals that transmit and receive data packets via a LAN. The time-synchronization-information-data transmitting apparatus 4 is a network terminal that transmits time-synchronization-information data through the LAN.

Transmission of the time-synchronization-information data is performed by broadcasting or multicasting. In the case of the first embodiment, the time-synchronization-information data is broadcast to the information processing apparatuses 1, 2, and 3. In other words, all the information processing apparatuses 1, 2, and 3 share the same time information, and transmit and receive data packets in accordance with a common communication schedule.

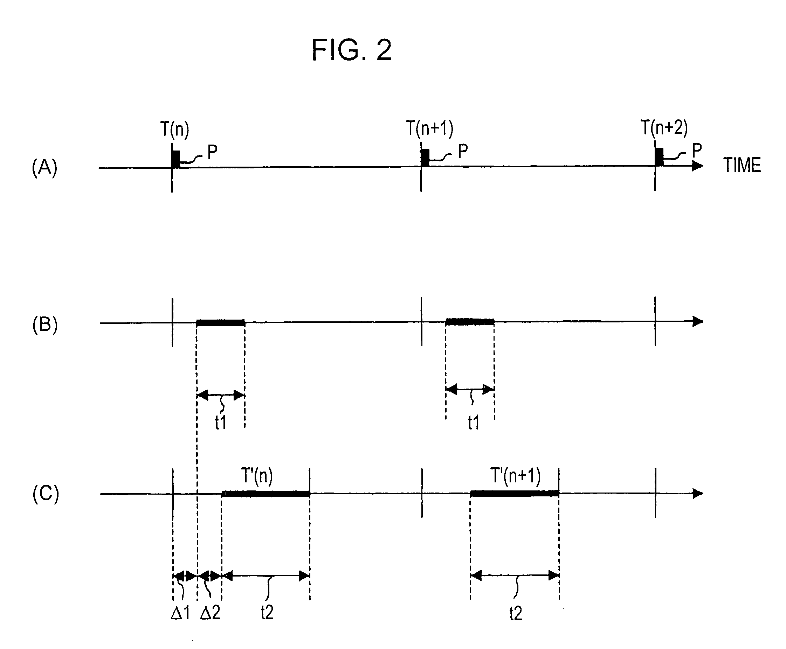

Fig. 2 shows the communication schedule.

Part (A) of Fig. 2 shows an example of timing for transmitting a time-synchronization-information packet by the time-synchronization-information-data transmitting apparatus 4. Time-synchronization-information packet P is broadcast at times T(n), T(n+1), T(n+2), etc.

The information processing apparatuses 1, 2, and 3 receive time-synchronization-information packet P, and synchronize their timers with times T(n), T(n+1), T(n+2), etc.

Parts (B) and (C) of Fig. 2 show communication-schedule setting examples based on the times indicated by the timers. In other words, Parts (B) and (C) of Fig. 2 show examples of a transmitting schedule and a receiving schedule, respectively. Application programs corresponding to transmitting and receiving functions operate in accordance with the transmitting and receiving schedules.

In the transmitting schedule, a sending period t1 for sending a data packet whose real-time functionality should be guaranteed is set for each of times T(n), T(n+1), T(n+2), etc. The data packet whose real-time functionality should be guaranteed is an example of a data packet whose transmission and reception within a predetermined reaching time are requested to be guaranteed.

In the receiving schedule, a receiving period t2 for a data packet whose real-time functionality should be guaranteed is set for each of times T(n), T(n+1), T(n+2), etc.

The sending period t1 is set in accordance with a transmitting amount of data whose real-time functionality should be guaranteed.

The receiving period t2 is set in accordance with a packet-reaching delay time unique to the LAN, time-out values of T'(n), T'(n+1), etc., which are set in the application program corresponding to the receiving function, and a processing-time margin in the case of data packet transmission using a communication protocol that executes retransmission when acknowledgement and communication fail.

A period Δ1 is an error in a time, used by the application programs of the information processing apparatuses 1, 2, and 3, for each of times T(n), T(n+1), T(n+2), etc., in the time-synchronization-information-data transmitting apparatus 4.

A period Δ2 is an error, in reception-confirmation time in the receiving function application programs of the information processing apparatuses 1, 2, and 3, for a data packet sending time.

It is preferable that each of both periods be ideally zero.

Time-synchronization-information data items T(n), T(n+1), T(n+2), etc., do not necessarily need to be periodically generated. For example, time-synchronization-information data items T(n), T(n+1), T(n+2), etc., may be aperiodically generated correspondingly to a case in which the receiving function application program need to set time-out values T'(n), T'(n+1), etc.

In addition, one sending period t1 and one receiving period t2 do not necessarily need to be set for each of times T(n), T(n+1), T(n+2), etc. For example, in the information processing apparatuses 1, 2 and 3, for each of times T(n), T(n+1), T(n+2), etc., a plurality of sending periods t1 and a plurality of receiving periods t2 may be set.

### B. Second Embodiment

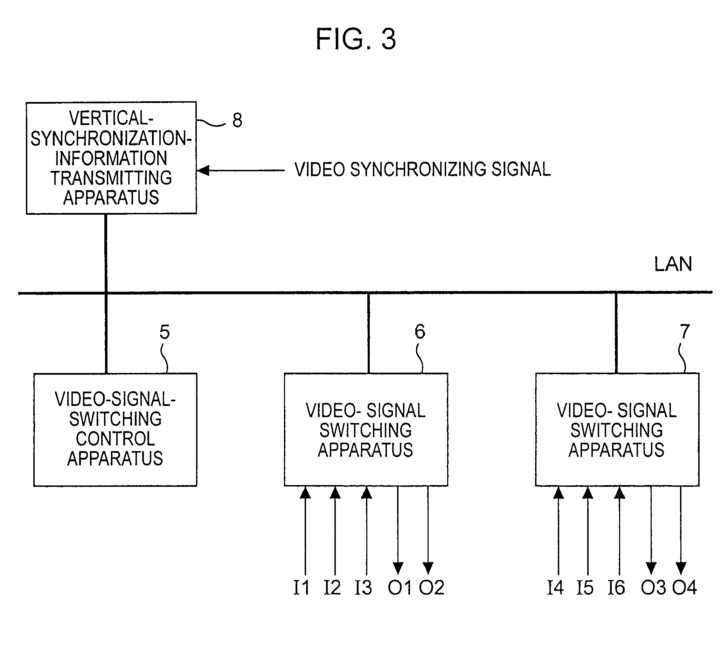

Fig. 3 shows an asynchronous network system according to a second embodiment of the present invention. In other words, Fig. 3 shows an example of a video-signal switching system to which an embodiment of the present invention is applied. In this example of the video-signal switching system, a form is described in which a video-signal-switching control apparatus 5, video-signal switching apparatuses 6 and 7, and a vertical-synchronization-signal transmitting apparatus 8 are connected to one another by a LAN.

The video-signal-switching control apparatus 5 and video-signal switching apparatuses 6 and 7 shown in Fig. 3 correspond to the information processing apparatuses 1, 2, and 3 in Fig. 1, respectively. The vertical-synchronization-signal transmitting apparatus 8 in Fig. 3 corresponds to the time-synchronization-information-data transmitting apparatus 4 in Fig. 1.

The video-signal switching apparatus 6 has a function of treating input video signals I1, I2, and I3 as signals to be selected, and outputting selected video signals as output video signals O1 and O2.

The video-signal switching apparatus 7 has a function of treating input video signals I4, I5, and I6 as signals to be selected, and outputting selected video signals as output video signals O3 and O4.

In this example, the vertical-synchronization-signal transmitting apparatus 8 supplies a vertical synchronizing signal to the video-signal-switching control apparatus 5 and the video-signal switching apparatuses 6 and 7 through the LAN. The vertical synchronizing signal is common to the system and playback of the vertical synchronizing signal is performed. The video-signal-switching control apparatus 5 and the video-signal switching apparatuses 6 and 7 operate while using the vertical synchronizing signal as common time information.

The video-signal switching apparatuses 6 and 7 operate based on control commands received through the LAN, and execute video-signal switching in response to the control commands.

The video-signal switching is executed in conjunction with timing of the vertical synchronizing signal. In the case of the second embodiment, a control command that controls video-signal switching is data whose transmission and reception within a predetermined reaching time are requested to be guaranteed.

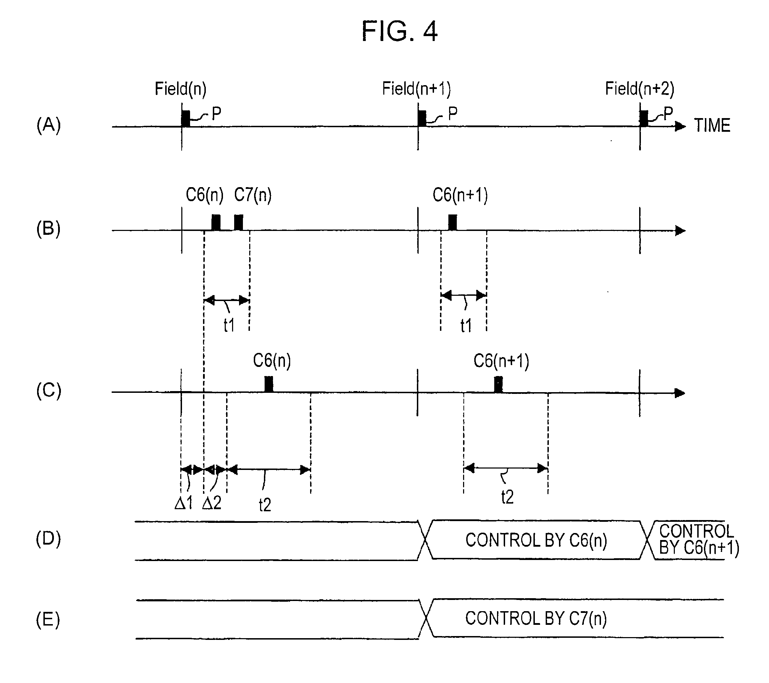

Fig. 4 shows an example of a communication schedule in the video-signal switching system. Fig. 4 shows transmission and reception of a control command and an example of switching-operation timing.

Part (A) of Fig. 4 shows an example of timing with which vertical synchronizing information is transmitted by the vertical-synchronization-signal transmitting apparatus 8 in Fig. 3. Here, vertical synchronizing packets P are broadcast with timing of Field(n), Field(n+1), Field(n+2), etc.

The video-signal-switching control apparatus 5 and the video-signal switching apparatuses 6 and 7 receive vertical synchronizing packets P and share Field(n), Field(n+1), Field(n+2), etc.

Part (B) of Fig. 4 shows a transmitting schedule of control commands C(n) and C(n+1). C(n) represents a control command that is transmitted in a transmitting period t1 corresponding to Field(n), and C(n+1) represents a control command that is transmitted in a transmitting period t1 corresponding to Field(n+1).

In addition, C6 represents a control command for the video-signal switching apparatus 6. C7 represents a control command for the video-signal switching apparatus 7.

Accordingly, C6(n) represents a command that is transmitted to the video-signal switching apparatus 6 in Field(n). C7(n) represents a command that is transmitted to the video-signal switching apparatus 7 in Field(n).

Part (C) of Fig. 4 shows a receiving schedule for receiving control commands C6(n) and C6(n+1).

The video-signal switching apparatus 6 receives C6(n) in the receiving period t2 corresponding to Field(n), and receives C6(n+1) in the receiving period t2 corresponding to Field(n+1). The video-signal switching apparatus 7 also receives C7(n) in the receiving period t2 corresponding to Field(n).

Part (D) of Fig. 4 shows a state in which control content of C6(n) is reflected in the next field, Field(n+1). Similarly, it shows a state in which control content of C6(n+1) is reflected in the next field, Field(n+2).

Part (E) of Fig. 4 shows a state in which control content of C7(n) is reflected in the next field, Field(n+1).

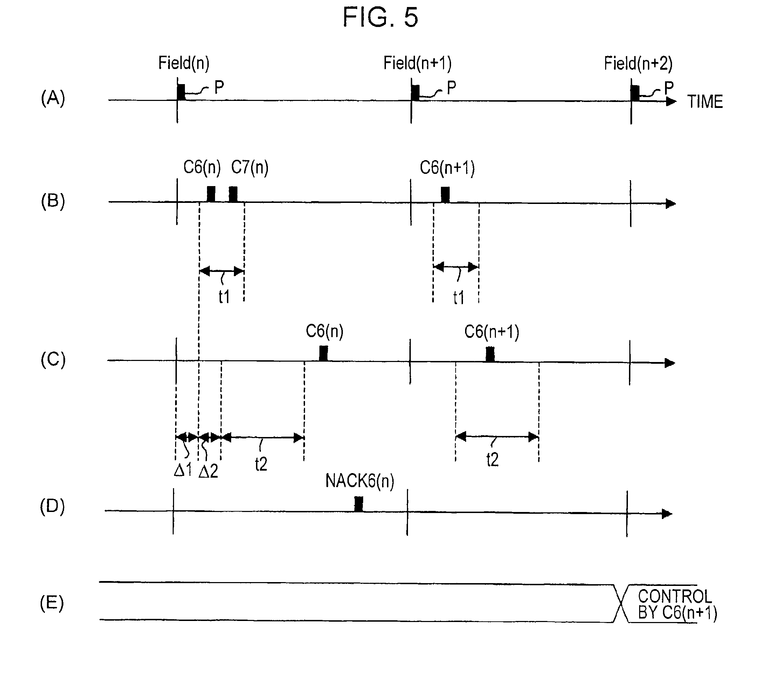

Fig. 5 shows an example of the operation of the video-signal switching apparatus 6 when it is difficult for the video-signal switching apparatus 6 to receive C6(n) in the receiving period t2. This is specifically shown in part (c) of Fig. 5.

Basically, in this embodiment, to prevent this situation from occurring, the sending period t1 and the receiving period t2 are set. However, there is a possibility that a propagation delay more than the set period may occur. In the communication schedule in Fig. 5, such an abnormal state is considered.

Confirmation of a success or failure of control command communication performed between the video-signal-switching control apparatus 5 and each of the video-signal switching apparatuses 6 and 7 is performed in a TCP/IP layer or application layer, which is not shown.

As a function different from the above, the receiving function application program determines whether a control command whose real-time functionality should be guaranteed has been received in the range of the receiving period t2. A control command received in a period longer than the receiving period t2 is invalidated.

In this case, as shown in part (D) of Fig. 5, by transmitting NACK6(n), invalidation of C6(n) is reported to the video-signal-switching control apparatus 5. This report enables the video-signal-switching control apparatus 5 to retransmit information having the same content with timing after the next field.

Part (E) of Fig. 5 shows a state in which control content of C6(n+1) is reflected in the next field, Field(n+2).

Methods for reporting a control-command-reception delay include a method that constantly transmits an ACK instead of transmitting a NACK. Specifically, in one method, when a control command is received within the receiving period t2, an ACK is sent back, and, when a control command is not received within the receiving period t2 due to a delay, no ACK is sent back. This response is a response to a success or failure of "reception within a period", and is different from that to a success or failure of "communication itself".

The methods for reporting a control-command-reception delay also include a method in which information of a success or failure of "reception within the receiving period t2" is added to the response indicating the success or failure of the "communication itself" using the control command.

### C. Third Embodiment

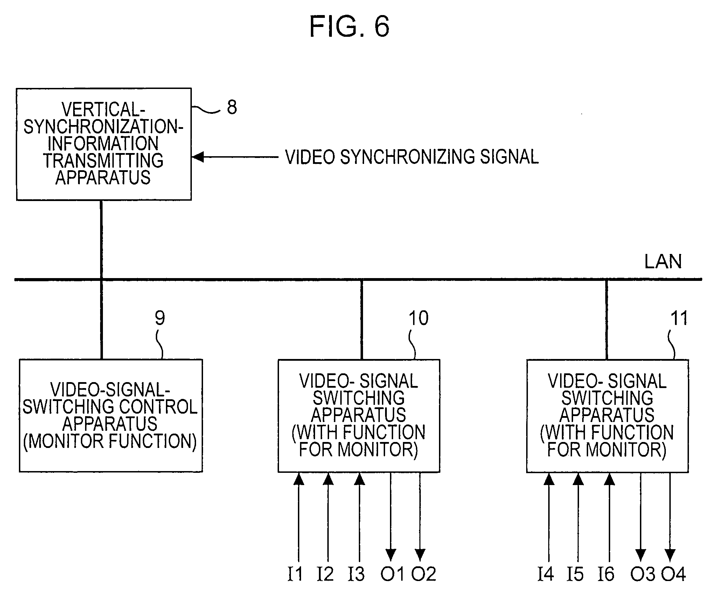

Fig. 6 shows an asynchronous network system according to a third embodiment of the present invention. Fig. 6 also shows an example of a video-signal switching system to which an embodiment of the present invention is applied. In this example of the video-signal switching system, a form is described in which the vertical-synchronization-signal transmitting apparatus 8, a video-signal-switching control apparatus 9 with a monitor function, and video-signal switching apparatuses 10 and 11 with functions for monitors are connected to one another by a LAN.

The video-signal-switching control apparatus 9, and video-signal switching apparatuses 10 and 11 in Fig. 6 correspond to the information processing apparatuses 1, 2, and 3 in Fig. 1, respectively. The vertical-synchronization-signal transmitting apparatus 8 in Fig. 6 corresponds to the time-synchronization-information-data transmitting apparatus 4 in Fig. 1.

The video-signal switching apparatus 10 has a function of treating input video signals I1, I2, and I3 as signals to be selected, and outputting selected video signals as output video signals O1 and O2.

The video-signal switching apparatus 11 has a function of treating input video signals I4, I5, and I6 as signals to be selected, and outputting selected video signals as output video signals O3 and O4.

A control command that controls this selecting operation is supplied from the video-signal-switching control apparatus 9 to each of the video-signal switching apparatuses 10 and 11 via the LAN.

The vertical-synchronization-signal transmitting apparatus 8 supplies vertical synchronizing information to the video-signal switching apparatuses 10 and 11. Playback based on a vertical synchronizing signal (common to the system) as the vertical synchronizing information is performed. The video-signal switching apparatuses 10 and 11 execute video signal switching in conjunction with the vertical synchronizing information.

The "function for the monitor" is used as the meaning of a function in which, from among input video signals and output video signals, a video signal designated by the video-signal-switching control apparatus 9 is packetized and transmitted.

In addition, the "monitor function" is used as the meaning of a function of displaying received packetized video signals.

A display image is displayed in accordance with the vertical synchronizing information received from the vertical-synchronization-signal transmitting apparatus 8. Display-image switching timing allows an error of approximately a field unit.

Therefore, the video signal packets can be treated as data packets different in property from the control command (described in the first embodiment) whose real-time functionality should be guaranteed.

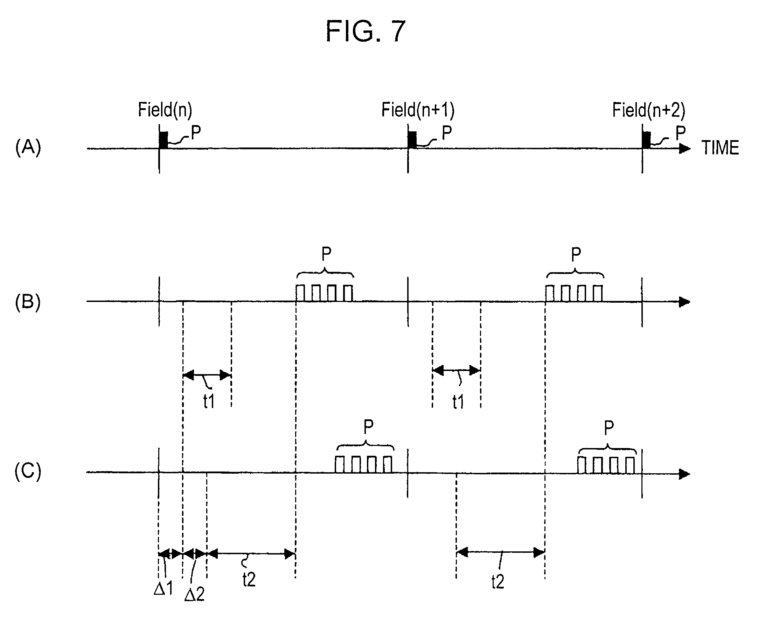

Fig. 7 shows an example of a communication schedule in the video-signal switching system. Descriptions of control-command transmission and reception and switching-operation timing are omitted since they are similar to those in the first embodiment.

Monitor-image transmitting timing and monitor-image receiving timing are described below. In other words, transmission of, in addition to a control packet requested to have real-time functionality, a video-signal packet which is not requested to have real-time functionality or which allows an error is described below.

Part (A) of Fig. 7 shows an example of timing with which the vertical synchronizing information is transmitted by the vertical-synchronization-signal transmitting apparatus 8.

The video-signal-switching control apparatus 9, and the video-signal switching apparatuses 10 and 11 operate while sharing vertical synchronizing timing of Field(n), Field(n+1), Field(n+2), etc.

Part (B) of Fig. 7 shows a transmitting schedule of packetized video signals. Part (C) of Fig. 7 shows a receiving schedule of packetized video signals. In Fig. 7, packets P transmitted by the video-signal switching apparatus 10 are indicated by voided rectangles. Parts (B) and (C) show a case in which four packets are transmitted in each field.

As shown in parts (B) and (C) of Fig. 7, the video signals are transmitted and received in a period of time after the receiving period t2 on the receiving schedule of the control command whose real-time functionality should be guaranteed.

Accordingly, for a control packet requested to have real-time functionality, communication within a set time and the execution of the communication are ensured, and transmission of a packet that is not requested to have real-time functionality is ensured. If communication with a packet that is not requested to have real-time functionality fails, the packet is re-sent.

### D. Other Embodiments

(a) In each of the foregoing embodiments, a system is described which includes information processing apparatuses each having a function of receiving and transmitting a data packet whose real-time functionality should be guaranteed and a data packet whose real-time functionality does not need to be guaranteed.
   However, another embodiment of the present invention is applicable to an asynchronous network system including an information processing apparatus that transmits and receives only data packets whose real-time functionality should be guaranteed, and an information processing apparatus that transmits and receives only data packets whose real-time functionality does not need to be guaranteed.
(b) In the foregoing embodiments, a case in which video-signal switching apparatuses and a switching control apparatus therefor are connected as pieces of video equipment has been described. However, other video equipment may be connected.
   For example, image-capturing cameras, monitoring cameras, other types of image-capturing apparatuses, and a control apparatus therefor may be connected. In addition, for example, a video server, a video cassette recorder, and another type of storage apparatus may be connected.
(c) In the foregoing embodiments, a video-signal switching system has been described as an example of an asynchronous network system. In addition, a case in which pieces of video equipment are connected as a type of information processing apparatuses forming the asynchronous network system has been described.
   However, the information processing apparatuses forming the asynchronous network system may be other pieces of electronic equipment. For example, they may include a speaker, a tuner, an amplifier, a switcher, and other pieces of audio equipment.
(d) The asynchronous network system is applicable to network systems for consumer use and to network systems for business use. For example, the asynchronous network system is applicable to broadcasting systems and terminal systems. In addition, the asynchronous network system is applicable to backbone systems between bases.
(e) The transmitting and receiving functions in each of the foregoing embodiments may be provided in information processing apparatuses for application systems of the embodiments. For example, the transmitting and receiving functions may be provided even in computers, printers, digital cameras, game machines, scanners, portable information terminals (such as portable computers, cellular phones, portable game machines, and electronic books), timepieces, image players (e.g., optical disc apparatuses, home servers), monitors, and television receivers.
   The transmitting and receiving functions can be provided not only in the form of a processing board, a semiconductor chip, or another type of hardware, but also in the form of a program executed on a computer.
(f) In the above-described embodiment, a case in which the time-synchronization-information-data transmitting apparatus 4 is separated from the information processing apparatuses 1, 2, and 3 has been described. However, the time-synchronization-information-data transmitting apparatus 4 may be provided in one of the information processing apparatuses 1, 2, and 3.

The present invention contains subject matter related to Japanese Patent Application JP 2004-321863 filed in the Japanese Patent Office on November 5, 2004, the entire contents of which are incorporated herein by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An asynchronous network system comprising:
a transmitting apparatus which transmits time-synchronization-information data through an asynchronous network; and
a plurality of information processing apparatuses which share identical time information by receiving the time-synchronization-information data,
wherein at least one data item whose transmission and reception within a predetermined reaching time are requested to be guaranteed is transmitted by one information processing apparatus among said plurality of information processing apparatuses to at least one of the other information processing apparatuses in a state in which said one information processing apparatus occupies a first interval on a communication schedule based on time-synchronization information represented by the time-synchronization-information data.

2. The asynchronous network system according to Claim 1, wherein said at least one data item whose transmission and reception within the predetermined reaching time are requested to be guaranteed is control data for instructing each of said plurality of information processing apparatus to perform an operation.

3. The asynchronous network system according to Claim 1, wherein said plurality of information processing apparatuses are pieces of video equipment.

4. The asynchronous network system according to Claim 3, wherein the pieces of video equipment are pieces of broadcasting equipment.

5. The asynchronous network system according to Claim 1, wherein said transmitting apparatus which transmits the time-synchronization-information data is provided in one of said plurality of information processing apparatuses.

6. The asynchronous network system according to Claim 1, wherein said at least one of the other information processing apparatuses includes a determining section which monitors reception of at least one data item whose transmission and reception in the first interval are needed to be guaranteed and which determines whether or not data is successfully received in a second interval on the communication schedule.

7. The asynchronous network system according to Claim 6, wherein said at least one of the other information processing apparatuses includes a reporting section which reports the result of the determination by said determining section to said one information processing apparatus which transmits said at least one data item.

8. An information processing apparatus for sharing identical time information with at least one different information processing apparatus existing on an asynchronous network,
the information processing apparatus comprising a transmitter which transmits, in a state in which said transmitter occupies a first interval on a communication schedule based on the identical time information as time-synchronization information, to said at least one different information processing apparatus, at least one data item whose transmission and reception within a predetermined reaching time are requested to be guaranteed.

9. An information processing apparatus for sharing identical time information with at least one different information processing apparatus existing on an asynchronous network,
the information processing apparatus comprising a determining section which determines whether or not at least one data item whose transmission and reception within a predetermined reaching time are requested to be guaranteed and which is transmitted from said at least one different information processing apparatus has normally been received within the predetermined reaching time.

10. The information processing apparatus according to Claim 9, further comprising a reporting section which reports the result of the determination by said determining section to said at least one different information processing apparatus which transmits said at least one data item.

11. A data-transmission managing method for an asynchronous network system including a transmitting apparatus for transmitting time-synchronization-information data through an asynchronous network and a plurality of information processing apparatuses which share identical time information by receiving the time-synchronization-information data,
the data-transmission managing method comprising the step of transmitting, by one information processing apparatus among said plurality of information processing apparatuses, in a state of occupying a first interval on a communication schedule based on time-synchronization information represented by the time-synchronization-information data, to at least one of the other information processing apparatuses, at least one data item whose transmission and reception within a predetermined reaching time are requested to be guaranteed.

12. A data-transmission managing method for an asynchronous network system including a transmitting apparatus for transmitting time-synchronization-information data through an asynchronous network and a plurality of information processing apparatuses which share identical time information by receiving the time-synchronization-information data,
the data-transmission managing method comprising the step of, by one information processing apparatus among said plurality of information processing apparatuses, determining whether or not at least one data item whose transmission and reception within a predetermined reaching time are requested to be guaranteed and which is transmitted from at least one of the other information processing apparatuses has normally been received within the predetermined reaching time.

13. A program for allowing a computer to execute processing, the computer controlling the operation of an information processing apparatus which shares identical time information with at least one different information processing apparatus existing on an asynchronous network,
the processing comprising the step of transmitting, in a state of occupying a first interval on a communication schedule based on the identical time information as time-synchronization information, to said at least one different information processing apparatus, at least one data item whose transmission and reception within a predetermined reaching time are requested to be guaranteed.

14. A program for allowing a computer to execute processing, the computer controlling the operation of an information processing apparatus which shares identical time information with at least one different information processing apparatus existing on an asynchronous network,
the processing comprising the step of determining whether or not at least one data item whose transmission and reception within a predetermined reaching time are requested to be guaranteed and which is transmitted from said at least one different information processing apparatus has normally been received in the predetermined reaching time.
